# EUROPEAN PATENT APPLICATION

(11) **EP 4 601 219 A1**
(43) Date of publication of application: **13.08.2025**
(21) Application number: 25156308.6
(22) Date of filing: 06.02.2025
(51) Int. Cl.: H04B 10/032, H04B 10/077, H04B 10/079, H04J 14/02

(54) **DEVICE, METHOD, APPARATUS AND MEDIUM FOR OPTICAL CHANNEL PROTECTION**

(30) Priority: 07.02.2024 CN 202410174552
(71) Applicant: Nokia Solutions and Networks Oy, 02610 Espoo (FI)
(72) Inventor: LIU, Da Lin, Shanghai, 201299 (CN); ZHANG, Jian Feng, Shanghai, 201206 (CN); ZHOU, Jie, Shanghai (CN); HUANG, Hua Ming, Shanghai (CN); CHEN, Ying Hui, Shanghai (CN)
(74) Representative: DREISS Patentanwälte PartG mbB

(57) **Abstract**

A device, method, apparatus, and medium for optical channel protection have been disclosed. A method for exemplary optical channel protection may comprise: in response to receiving fault information in an optical transmission network, performing alarm evaluation based on the fault information, wherein the fault information comprises first fault information associated with an electrical layer of the optical transmission network; and generating an action instruction for optical channel switching at least based on the evaluation result.

## Description

### TECHNICAL FIELD

The present disclosure relates to the field of network communication technology, particularly to a device, method, apparatus, and storage medium for optical channel protection of an optical transport network (OTN) and a data center interconnection (DCI).

### BACKGROUND

Optical transport network (OTN) is a transmission network based on wavelength division multiplexing technology, which may be applied to the comprehensive carrier of services such as data center interconnection (DCI). The OTN network comprises an optical layer and an electrical layer, wherein the optical layer is used for transmitting optical signals, while the electrical layer is used for optoelectronic transition of optical signals, namely converting the transmitted optical signals into electrical signals, and performing signal recovery and electrical signal processing at the receiving terminal.

OTN/DCI network systems typically require support for optical line protection (OLP) mechanisms to restore user service between network nodes when an optical failure occurs. The optical transmission network employs two independent optical lines for optical signal transmission, and the terminal nodes may be able to automatically select the better path based on the detected fault situation, thereby ensuring the normal operation of the service.

The existing OLP modules are all implemented based on the detection of optical power of optical signals transmitted by the optical layer, and there is currently no mechanism for optoelectronic cooperative protection between the optical layer and the electrical layer.

### SUMMARY

The various exemplary embodiments of the present disclosure are intended to address at least a portion of the above-mentioned problems or issues.

According to a first aspect of the present disclosure, a method for optical channel protection is provided, comprising: in response to receiving fault information in an optical transmission network, performing alarm evaluation based on the fault information, wherein the fault information comprises first fault information associated with an electrical layer of the optical transmission network; and generating an action instruction for optical channel switching at least based on the evaluation results.

In a second aspect, an apparatus for optical channel protection is provided, which may comprise at least one processor and at least one memory. The at least one memory may store instructions, which, when executed by the at least one processor, may cause the apparatus for optical channel protection to at least: in response to receiving fault information in an optical transmission network, perform alarm evaluation based on the fault information, wherein the fault information comprises first fault information associated with the an electrical layer of the optical transmission network; and generate an action instruction for optical channel switching at least based on the evaluation results.

In a third aspect, an apparatus for optical channel protection is provided, comprising: an alarm evaluation module for in response to receiving fault information in an optical transmission network, performing alarm evaluation based on the fault information, wherein the fault information comprises first fault information associated with an electrical layer of the optical transmission network; and an action indication generating module, for generating an action indication for optical channel switching based at least on the evaluation results.

In a fourth aspect, a computer program product is provided, comprising (computer executable) computer program instructions configured to, when executed (or run) on a computer, cause the computer to perform the method of the aforementioned exemplary aspects.

The computer program product may comprise or be embodied as a computer-readable (storage) medium, on which computer program instructions executable by computer and/or programs that may be directly loaded into the internal memory of the computer or its processor are stored.

### BRIEF DESCRIPTION OF THE DRAWINGS

Figure 1 shows a schematic diagram of the protection network in the optical channel protection (OCHP) scenario;
Figure 2 shows a schematic architecture diagram of an optical channel protection system according to an exemplary embodiment of the present disclosure;
Figure 3 shows an example flowchart of a method for optical channel protection according to an exemplary embodiment of the present disclosure;
Figure 4 shows a schematic diagram of a fault message according to an exemplary embodiment of the present disclosure;
Figure 5 shows a schematic diagram of optical channel protection switching according to an exemplary embodiment of the present disclosure;
Figures 6A and 6B show schematic diagrams of optical channel protection switching according to an exemplary embodiment of the present disclosure;
Figure 7 shows a schematic diagram of optical channel protection switching according to an exemplary embodiment of the present disclosure;
Figure 8 shows a schematic diagram of optical channel protection switching according to an exemplary embodiment of the present disclosure;
Figure 9 shows a schematic diagram of optical channel protection switching according to an exemplary embodiment of the present disclosure;
Figure 10 shows a schematic diagram of optical channel protection switching according to an exemplary embodiment of the present disclosure;
Figure 11 shows a schematic diagram of optical channel protection switching according to an exemplary embodiment of the present disclosure;
Figure 12 shows a schematic block diagram of a device for optical channel protection according to an exemplary embodiment of the present disclosure.
Figure 13 shows a schematic block diagram of an apparatus for optical channel protection according to an exemplary embodiment of the present disclosure.

The same or substantially same elements, operations, and steps shown in various figures may be represented by the same reference numerals. For clarity purposes, not every component, operation, and step is shown in every figure.

### DETAILED DESCRIPTION

The exemplary embodiments of the present disclosure will be described in more detail below with reference to the accompanying drawings. It should be understood that the present disclosure should not be interpreted as limited to the exemplary embodiments described herein, but may also be implemented in various other manners, and these exemplary embodiments are provided only for a more thorough and complete understanding of the present disclosure. It should also be understood that the accompanying drawings of this disclosure are provided only as examples and are not intended to limit the precise form of the embodiments or to limit the scope of protection of this disclosure.

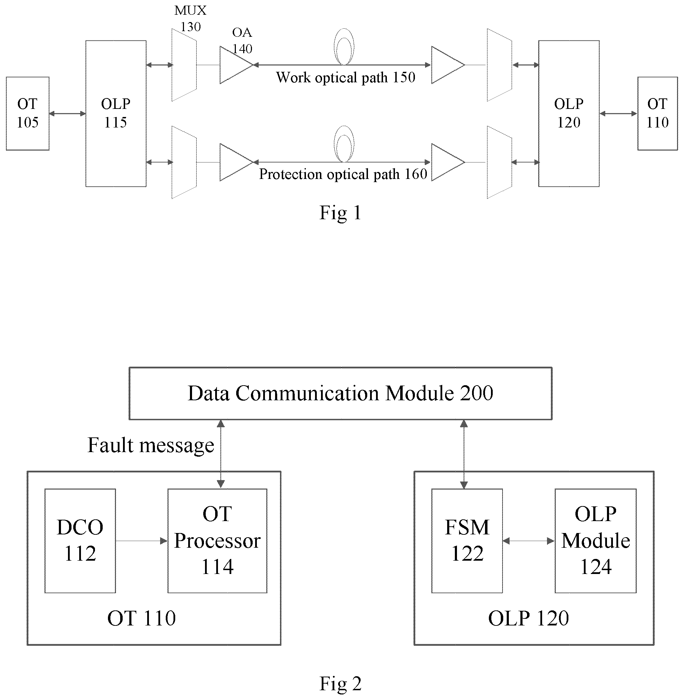

In order to increase the robustness of communication links, optical communication networks typically provide protection for signal through redundant lines. Fig. 1 shows a schematic diagram of the optical transport network (OTN) networking in the optical channel protection (OCHP) scenario. As shown, user end devices may communicate with each other through an optical transponder (OT) 105, 110 to perform bidirectional service transmission and reception. For example, the OTs 105, 110 can be set in the electrical layer board. The optical layer of an OTN network may comprise an optical line protection device (OLP) 115, 120, a multiplexer (MUX) 130, an optical amplifier (OA) 140 and other components. During the communication process, service data is converted into optical signals by OT 105, and then broadcast to working optical path 150 and protection optical path 160 through OLP 115 for transmission. The OT 110 at the receiving end may select a better path based on the quality of the received signal, such as working optical path 150. Although Fig. 1 only shows a pair of optical converters at the user end, it may be understood that the optical transport network OTN may comprise multiple optical converters, each of which may select an optical channel through a corresponding optical line protection device. It may also be understood that the optical channel protection (OCHP) shown in Fig. 1 may also be applied to other optical transmission networks such as DCI, that is, the terms "optical communication network" and "optical transmission network" in this disclosure comprise various network systems (such as OTN and DCI) that use optical signals for data transmission.

In the actual transmission of optical signals in the optical layer of OTN/DCI networks, the optical power often decreases due to fiber interruption, degradation, jitter, or other reasons. At this time, OLP 120 may detect the change in optical power of optical signals on all of the optical path. When the optical power of the optical signal on the current optical path drops below a preset threshold, OLP 120 may switch the channel signal from working optical path 150 to protection optical path 160 so as to protect the service wavelength.

The above provides an exemplary explanation of the application scenarios of the embodiments of the present disclosure using optical channel protection (OCHP) as an example, but the present disclosure is not limited to this. As described below, some embodiments of the present disclosure are also compatible with other protection modes of optical transmission networks, such as optical multiplex section protection (OMSP) and optical line protection (OLP). As known to those skilled in the art, the optical line protection device in optical multiplex section protection (OMSP) is located between the multiplexer (MUX) unit and the optical amplifier (OA) unit, while the optical line protection device in optical line protection (OLP) is located after the optical amplifier (OA) unit and their working principles are similar to that of optical channel protection (OCHP), and will not be repeated here.

The existing OCHP, OMSP, and OLP optical path protection are all implemented based on optical power detection of optical signals transmitted by the optical layer, such as switching the optical line when the optical power is below a set threshold. Ideally, the initially set power threshold should ensure that the switching protection of the optical channel may be triggered when the electrical layer performance deteriorates to a certain level during subsequent system operations.

However, this one-time setting method may not effectively support optical line protection in certain situations. For example, for long-distance transmission, due to the dynamic changes in the performance tolerance of the service carrying wavelength under long-term operation, thus when the optical power switching threshold lacks a dynamic update mechanism, the degradation of optical channel performance may lead to post forward error correction (post-FEC) errors in the electrical layer. However, since the optical layer detection has not reached the optical power threshold, the protection switching of the optical line will not be triggered at this time. As a further example, by setting up an electrical relay device on the transmission line to achieve long-distance transmission, if there is optical loss or signal degradation in the upstream link of the electrical relay device, it may cause post forward error correction errors in the electrical layer or trigger optical channel data unit alarm indication signal (ODU-AIS). However, the received optical power at the downstream device nodes of the electrical relay device does not change significantly, so it will not trigger protection switching of the optical line, which will affect the normal operation of communication services.

In view of this, some aspects of the embodiments of the present disclosure provide a method for optical channel protection for an optical transmission network. By establishing a mechanism for coordinated monitoring and switching protection between the electrical layer and the optical layer in OTN/DCI and other networks, the optical layer module may be triggered to perform optical channel switching protection when fault information (such as bit errors or interruptions) is detected by the electrical layer module. At the same time, when fault information (such as optical loss) is detected by the optical layer module, switching operations may be performed based on the priority of the electrical layer and the optical layer, thereby reducing or even eliminating the impact on normal service operation and improving the reliability of the optical transmission network.

Fig. 2 illustrates an example architecture of an optical channel cooperative protection system according to an exemplary embodiment of the present disclosure. The optical channel protection system comprises an electrical layer module, an optical layer module, and a data communication module 200. Among them, the electrical layer module may be installed on the electrical layer board card (disk), which comprises an optical transponder OT 110; the optical layer module may be installed on the optical layer board card, which comprises an optical layer protection module and a status machine, such as the optical line protection device OLP 120. OT 110 and OLP 120 may be located in the same shelf or set up across different shelves, and the two may communicate data through the data communication module 200.

As shown in Fig. 2, the optical transponder OT 110 of the electric layer module may comprise a digital coherent optics (DCO) module 112 and an OT processor 112. The DCO module 112 may convert received optical signals into electrical signals and monitor the performance of the signals. When the optical power of the input optical signal is found to be too low and the continuity of the input signal is found to be lost, a loss of signal (LOS) fault message is generated; when the received data frame cannot be correctly analyzed, fault information such as loss of frame (LOF), loss of multi-frame (LOM), alarm indication signal (AIS), bit interleaved parity 8 - threshold crossing alert (BIP8 TCA), uncorrectable FEC block - threshold crossing alert (UCB TCA) occurs. When such fault information are detected, the DCO module 112 may send the corresponding fault information to the OT processor 114.

After receiving the electrical layer fault information sent by the DCO module 112, the OT processor 114 may integrate the original fault information with the identification information of the OT 110 (such as physical channel identifier) to form a layer-2 internal LAN (ELAN) fault message, and send the fault message to the corresponding optical line protection device OLP 120 through the data communication module 200 (such as a communication device or module that performs data forwarding function through a switch). If a change in fault information is detected, the OT processor 114 may promptly send a new fault message to the OLP 120 through the ILAN communication channel for rapid response for optical channel protection operation.

Although only one optical transponder OT module is shown in the figure, it shall be understood that the OTN/DCI optical transmission network of this embodiment may comprise multiple OT modules, each with similar functional components, and may send the detected fault information in electrical layer to OLP 120 through data communication module 200.

In response to receiving a fault message from OT 110, the data communication module 200 may determine the optical line protection device corresponding to OT 110, such as OLP 120, based on the identification information contained in the fault message, and forward the fault message to OLP 120.

The optical line protection device OLP 120 may comprise a finite status machine (FSM) 122 and an optical line protection (OLP) module 124, both of which may be connected through internal bus communication. Among them, the OLP module 124 is configured to bridge the optical signal carrying service to the working optical channel and the protection optical channel, which may be, for example, a 1+1 protection channel unit. In addition, the OLP module 124 may also perform real-time optical power monitoring and generate optical loss fault signals when the optical power of the working and protection optical channels are below the set threshold, and report the fault signal to the status machine FSM 122.

The status machine FSM 122 receives all raw electrical layer fault information (herein also referred to as first fault information) and corresponding identification information from all OT cards (e.g., including OT 110) associated with multiple protection groups, and maps the fault information to the corresponding alarm level (first alarm level) of the corresponding protection group. When the status machine FSM 122 receives optical layer fault information (herein also referred to as second fault information) from the OLP module 124, it may also map the fault information to the corresponding alarm level (second alarm level) of the corresponding protection group. Afterwards, the status machine FSM 122 may evaluate alarms based on the obtained first alarm level and/or second alarm level, and generate an action instruction for optical channel switching based on the evaluation result. In some cases, the status machine FSM 122 may also generate new state request(s) and switching action indication(s) based on local instructions (such as manual switching, forced switching, etc.) and protection mode.

The status machine FSM 122 may send the generated action instruction to the OLP module 124, which, in response to the received action instruction, may quickly perform an optical channel switching operation between the primary (work) optical channel and the protection optical channel, thereby reducing or eliminating the adverse effects of faults on the service and improving the reliability of the OTN/DCI network.

The above provides a schematic description of the structure of the optical channel cooperative protection system and the functions of various components. It should be noted that one or more of the OT processor 114 and the finite status machine FSM 122 may be implemented in hardware form, such as an application specific integrated circuit (ASIC), a field programmable gate array (FPGA), or other programmable logic devices. It should be understood that one or more of the above modules may also be software modules or programs, which implement corresponding functions or actions when executed by the central processing unit (CPU) and are not limited by the present disclosure.

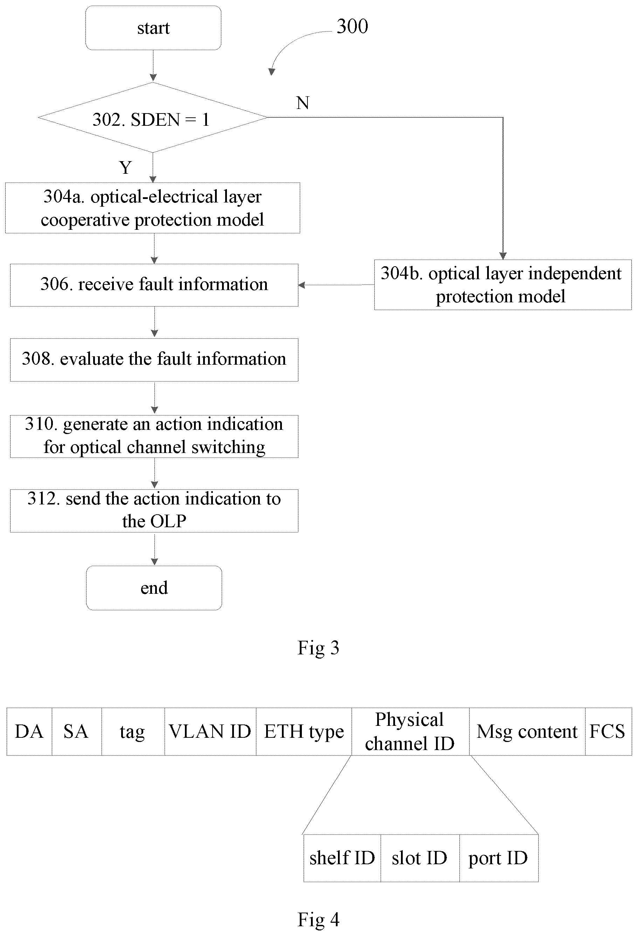

Fig. 3 shows an example process 300 of the optical channel protection method provided by the present application, which may be executed, for example, by the finite status machine FSM 122 shown in Fig. 2. In one embodiment, process 300 may be repeatedly executed to perform real-time optical channel protection processing on OTN/DCI and other networks.

As shown in Fig. 3, process 300 begins at step 302, where the finite status machine FSM 122 first determines whether to refer to the fault information of the electrical layer to determine an optical channel switching instruction during the monitoring process of network operation based on the configuration information of the OTN/DCI network.

In one embodiment, the configuration information may be related to the optical layer protection manner of the OTN/DCI network, which may be set by the network administrator. For optical channel protection (OCHP), the configuration information (SDEN) may be set to 1, which means that FSM 122 will refer to the first (electrical layer) fault information to implement collaborative protection based on the electrical and optical layers. That is to say, in step 304a, FSM 122 may enable to perform alarm evaluation based on the first fault information and generate action instructions for optical channel switching based on the evaluation results. On the other hand, for optical multiplex section protection (OMSP) or optical line protection (OLP), in step 304b, FSM 122 will enable independent optical layer protection. That is to say, even if an electrical layer fault information is received from OT 110, the fault information does not participate in FSM 122's request processing and FSM 122 only evaluates alarms and makes switching instructions based on the optical layer fault information received from OLP module 124.

Through the configuration information, an embodiment of the present disclosure may support various application scenarios such as OCHP, OMSP, OLP, etc., thereby meeting needs regarding the optical path protection of various customers. Especially for the OCHP scenario, even when the optical power of the optical signal does not reach the switching threshold, according to an embodiment of the present disclosure, optical channel switching may be triggered if downstream OT cards continue to experience errors, and forward error correction (FEC) cannot effectively compensate for signal-to-noise ratio (SNR), thereby improving the reliability of optical transmission networks such as OTN/DCI.

In step 306, FSM 122 may receive fault information in the optical transmission network.

In one embodiment, the fault information may be the first fault information associated with the electrical layer of the optical transmission network. Referring to Fig. 2, FSM 122 may receive a fault message from OT 110 through data communication module 200, which comprises the first fault information detected by DCO module 112 and the physical channel identifier associated with OT 110.

Fig. 4 shows a schematic diagram of the structure of a fault message provided by the present disclosure. As shown in Fig. 4, the fault message may be in the frame format of a virtual local area network (VLAN), which in one embodiment may comprise the following fields: destination MAC address (DA), source MAC address (SA), VLAN tag, VLAN identifier, physical channel identifier, fault message content, and frame check sequence (FCS). As an example rather than a limitation, the tag protocol identifier (TPID) in VLAN tags has a value of 0x8100. The VLAN identifier is the same identifier shared by all OT/OLP cards in the protection group. The ETH type represents a specific Ethernet frame type, the physical channel identifier (ID) is associated with the OT card, and is used to identify which layer module the fault message originates from, and the fault message content is used to indicate the type of detected original fault.

The physical channel identifier may comprise one or more of the shelf identifier, slot identifier, and port identifier of the OT card. Among them, the shelf identifier and slot identifier respectively indicate the shelf number and slot number of the OT card in the OTN device. By including the shelf identifier, this embodiment of the present disclosure may support the electrical-optical layer collaborative protection mode of a single shelf (i.e., OT 110 and OLP 120 are located in the same shelf), as well as the collaborative protection mode across multiple shelfs (i.e., OT 110 and OLP 120 are located in different shelfs). For port identifier, when there are multiple DCO ports in the OT card, the port identifier may correspond to the number of the DCO port that detects the electrical layer fault information.

The first fault information may comprise signal loss (LOS), frame loss (LOF), multi frame loss (LOM), alarm indication signal (AIS), threshold crossing alert (TCA), and other fault information. It may be understood that this embodiment is not limited to this, and any detected faults caused by the electrical layer may be used as the first fault information and reported to FSM 122. In one embodiment, the first fault information may employ a specific length (e.g. 2 bytes) field to indicate the original fault type. By analyzing the received original fault information, FSM 122 may be aware of the root cause of the optical line switching.

In addition to the first fault information related to the electrical layer, in some embodiments, FSM 122 may also receive the second fault information related to the optical layer of the OTN/DCI network from OLP module 124. For example, when the optical power drops below a preset threshold due to fiber interruption, degradation, flashing, and jitter, OLP module 124 may detect a fault in the optical layer and promptly report the corresponding fault information to FSM 122.

Generally speaking, when a fault occurs in the optical layer of a network device, the electrical layer may also detect the fault simultaneously, that is, FSM 122 will receive the first fault information and the second fault information. In this case, FSM 122 may determine the switching request for the optical channel based on the priority of the two pieces of information, which will be described in detail later.

Returning to Fig. 3, in step 308, in response to receiving the first fault information and/or the second fault information, FSM 122 may perform alarm evaluation based on the received fault information. Fault information comprises all detected raw fault information, such as electrical layer faults detected by DCO(s) in a single shelf OT, electrical layer faults detected by DCOs across multiple shelfs OT, and optical power faults detected by OLP module(s).

In one embodiment, FSM 122 may map the first and/or second fault information to corresponding first and/or second alarm levels, and then determine the alarm level of the fault information based on the first and/or second alarm levels. Due to the fact that optical loss is more severe than electrical layer faults, users may hope that the optical line protection device may respond and make switching action instructions faster when optical loss occurs. Therefore, the priority of the first alarm level may be set to be lower than that of the second alarm level. For example, the first alarm level is configured to indicate signal degradation (SD), while the second alarm level is configured to indicate signal fail (SF).

In one embodiment, when FSM 122 receives layer fault information from OT 110, FSM 122 will assign an alarm level of signal degradation to it. When receiving optical loss information from OLP module 124, FSM 122 will assign an alarm level for signal failure. Afterwards, FSM 122 may also receive electrical layer fault information, but due to the priority of signal failure being higher than that of signal degradation, FSM 122 will not change its alarm level.

In step 310, based on the evaluation result determined in step 308, FSM 122 may generate an action indication for optical channel switching.

In one embodiment, FSM 122 may first determine the transition state of the protection group of the optical transmission network (OTN/DCI) based on the evaluation result, and then generate an action indication for optical channel switching based on the current request of the protection group and the determined transition state. Among them, the protection group comprises the working optical channel and the protection optical channel of the network.

In one embodiment, the current primary optical channel (also referred to as the active channel) may be one of the working optical channel and the protection optical channel. When using the current primary optical channel for data communication, responding to that fault information is detected by the optical/electrical layer, FSM 122 may directly determine the transition state of the protection group based on the alarm level of the fault information. For example, upon receiving the first fault information, a new transition state/request may be determined as signal degradation (SD); when receiving the second fault information, or both the second fault information and the first fault information, a new transition state/request may be determined as signal failure (SF).

In one embodiment, the current request and determined transition state of the protection group may inherit or follow the definition in "ITU-T G.873.1-OTN: Linear Protection". The current request/state of the protection group, in addition to signal degradation (SD) and signal failure (SF), may also comprise lockout of protection (LoP), forced switch (FS), manual switch (MS), wait to restore (WTR), do not revert (DNR), no request (NR), etc., each of which has a corresponding priority, wherein LoP has the highest priority and NR has the lowest priority.

In one embodiment, a state transition table may be prepared in advance according to preset transition rules. Based on the current request and the determined new transition state, the action indication for optical channel switching may be queried in the state transition table and thus be determined, which will be described in detail below.

For example, assuming that the current request/state of the protection group is no request (NR), or that the network system is working normally on the working or protection optical channel, and when receiving electrical layer fault information, FSM 122 may determine the new transition state as signal degradation (SD) and quickly generate an action indication for optical channel switching, indicating switching from the working optical channel to the protection optical channel (assuming it is currently operating on the working optical channel), or switching from the protection optical channel to the working optical channel (assuming it is currently operating on the protection optical channel). In this way, the embodiments of the present disclosure may switch optical channels to improve the reliability of data communication and thus enhance the reliability of OTN/DCI network systems, even when the optical power detection is normal but the signal quality received by the electrical layer board has deteriorated.

Referring to Fig. 1, since the optical service in OT 110 is located downstream of OLP 120, the OT card only monitors the operating status of the current primary optical channel in the electrical layer, and does not sense whether there is a fault in the standby channel. That is to say, the system performs a "blind switch". For example, when FSM 122 determines that there is the fault in the electrical layer in which the current primary optical channel is located, it assumes that the other optical channel is normal after waiting for a predetermined time and generates an action indication for optical channel switching, so that the system may switch to another optical channel in order to achieve normal operation. This may lead to some problems, such as OT card detect electrical layer faults in the working and protection optical channels one after another, but when there is no optical layer fault, the system will experience switching oscillations, which not only seriously affects the user's service use, but also reduces the lifecycle of the OLP module.

In order to avoid the occurrence of switching oscillations, in some embodiments, FSM 122 may freeze the current transition state and action indication of the protection group in response to the number of optical channel switching between the working optical channel and the protection optical channel exceeding a predetermined value within a preset time. For example, when the current request/state of the protection group is signal degradation (SD), FSM 122 may start a predetermined oscillation timer. If the number of the optical channel switching exceeds the preset value within the time interval specified by the timer, FSM 122 may determine that signal degradation is detected at the corresponding OT card when data is transmitted in both the working and protection optical channels. At this time, FSM 122 may freeze the system's transition state and no longer send new optical channel switching action instructions, thereby terminating the switching oscillation.

In one embodiment, "blind switching" is within the alarm level range of signal degradation (SD), so for the frozen state (also referred to as "SD-Freeze" state in this disclosure), its priority may be defined between SF priority and SD priority, that is, SF priority>SD-Freeze priority>SD priority. In one embodiment, by combining some existing requests/states defined by ITU-T G.873.1, a reasonable priority ranking for each request/state may be determined, as shown in Table 1 below:

**Table 1**

| Request/State | Priority |
|---|---|
| Lockout of protection (LoP) | 1 (maximum) |
| Forced Switch (FS) | 2 |
| Signal Failure (SF) | 3 |
| Signal degradation freeze (SD-Freeze) | 4 |
| Signal degradation (SD) | 5 |
| Manual Switch (MS) | 6 |
| Wait to Restore (WTR) | 7 |
| Do not revert (DNR) | 8 |
| No Request (NR) | 9 (minimum) |

In one embodiment, after FSM 122 determines that the system meets the preset conditions and thus enters the SD-Freeze state, it may notify the user to initiate an external lockout of protection (LoP) or forced switch (FS) command, so that the system may still transmit service data on one optical channel and exit the SD-Freeze state. In some cases, if there is a fault of light loss on the working or protection optical channel, FSM 122 may automatically transition from SD-Freeze to a signal failure (SF) state with a higher priority, then there is no need for manual intervention by the user.

In one embodiment, based on the priority of each state/request in Table 1, a state transition table may be compiled to facilitate FSM 122 in generating action indications, where a request/state with a relatively higher priority may change a state with a relatively lower priority. That is to say, in step 310, FSM 122 may generate action instructions for optical channel switching based on the priority corresponding to the current request of the protection group and the determined transition state.

FSM 122 supports both reversible and non-reversible operations. In reversible operations, after the cause of the switching is eliminated, normal service signals are restored to the working optical channel; in non-reversible operations, normal service signals are allowed to retain on the protection optical channel even after the cause of the switching has been eliminated. In addition, as discussed earlier, in order to support various application scenarios such as optical channel protection (OCHP), optical multiplex section protection (OMSP), and optical line protection (OLP), the configuration information (SDEN) may be used to determine whether to use optical layer-electrical layer cooperative protection or optical layer independent protection mode. For example, when SDEN=1, FSM 122 may determine the OTN/DCI network adopts optical layer-electrical layer cooperative protection for optical channel protection (OCHP), while when SDEN=0, FSM 122 may determine the OTN/DCI network adopts optical layer independent protection mode for optical multiplex section protection (OMSP) or optical line protection (OLP).

Therefore, it is necessary to determine four types of state transition tables. According to the embodiments of the present disclosure, as for the OCHP protection mode (SDEN=1), some state transitions and corresponding action indications may be shown in Table 2 (revertive, no APS) and Table 3 (non-revertive, no APS):

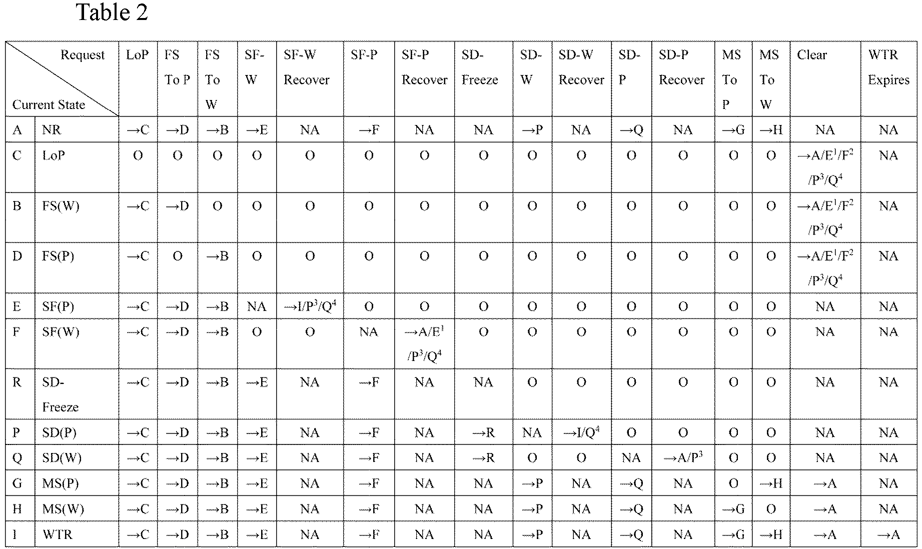

In Table 2, "NA" indicates that the event is not expected to occur for this state, but if it does occur, the event is ignored; "O" indicates that the request has been rejected because it has the same or lower priority; in the current status column of the protection group, "W" (work) in parentheses indicates that the current primary channel is the working optical channel, "P" (protection) indicates that the current primary channel is the protection optical channel; "SF-W/SF-P" in the request row indicates signal failure (SF) on the working/protection optical channel, and "SD-W/SD-P" indicates signal degradation (SD) occurs on the working/protection optical channel; as for signal degradation freeze (SD-Freeze) state, the nearest primary channel may be selected; "→A/E¹/F²/P³/Q⁴" indicates that the state transitions to A or E or F or P or Q under predetermined conditions, where 1) if SF-W is reasserted, 2) if SF-P is reasserted, 3) if SD-W is reasserted, and 4) if SD-P is reasserted.

From Table 2, it can be seen that requests such as lockout of protection (LoP), forced switch (FS), or signal failure (SF) may clear the signal degradation-freeze (SD-Freeze) state.

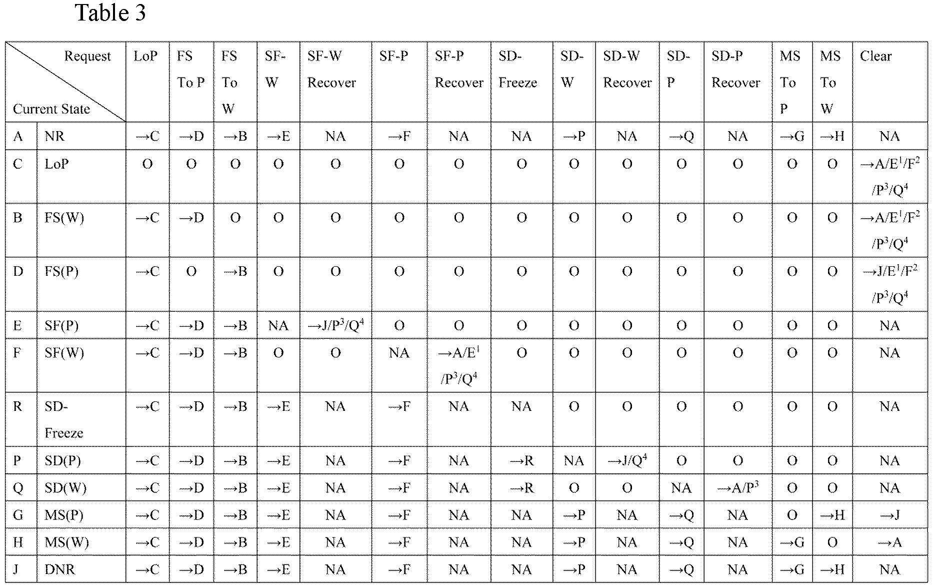

For optical multiplex section protection (OMSP) and optical line protection (OLP), due to the use of an optical layer independent protection mode, there is no request/state for signal degradation (SD). Some state transitions and corresponding action indicators may be shown in Table 4 (revertive, no APS) and Table 5 (non-revertive, no APS):

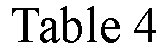

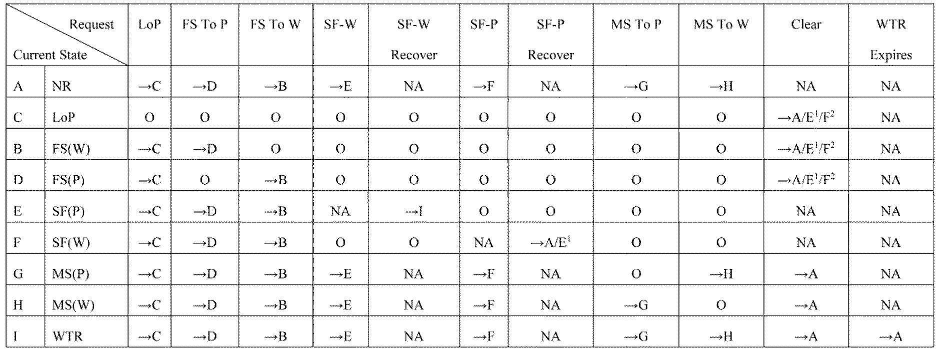

1) If SF-W is reasserted, 2) If SF-P is reasserted. 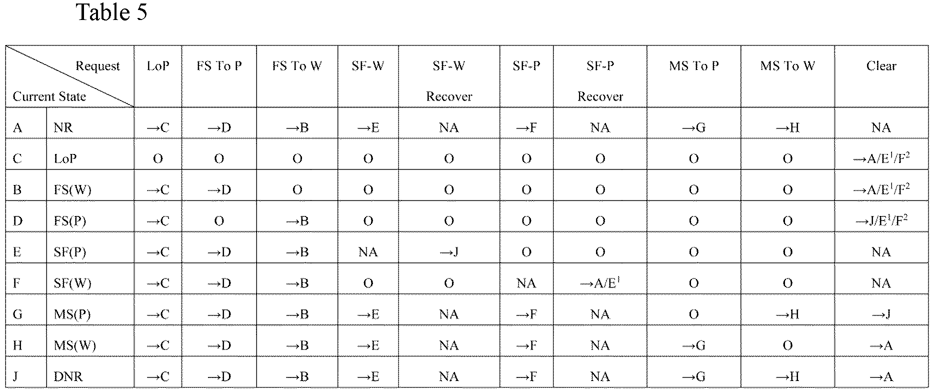
1) If SF-W is reasserted, 2) If SF-P is reasserted.

After FSM 122 generates corresponding action indications based on the state transition table, in step 312, it may send the generated action indications to the optical layer line protection module OLP 124 in the OTN/DCI network. In some embodiments, OLP 124 may execute the action instruction by switching the optical switch after receiving it, so as to quickly switch the optical channel to the better quality one and thus ensure the normal operation of the traffic. As for application scenarios such as optical channel protection (OCHP), optical multiplex section protection (OMSP), and optical line protection (OLP), the protection switching time may meet the time requirements of ITU-T G.873.1 protection switching, for example, less than 50ms.

In order to make the above objectives, features, and advantages of the present disclosure more obvious and understandable, in the following the method for the optical channel protection of the present disclosure is illustrated through some specific embodiments.

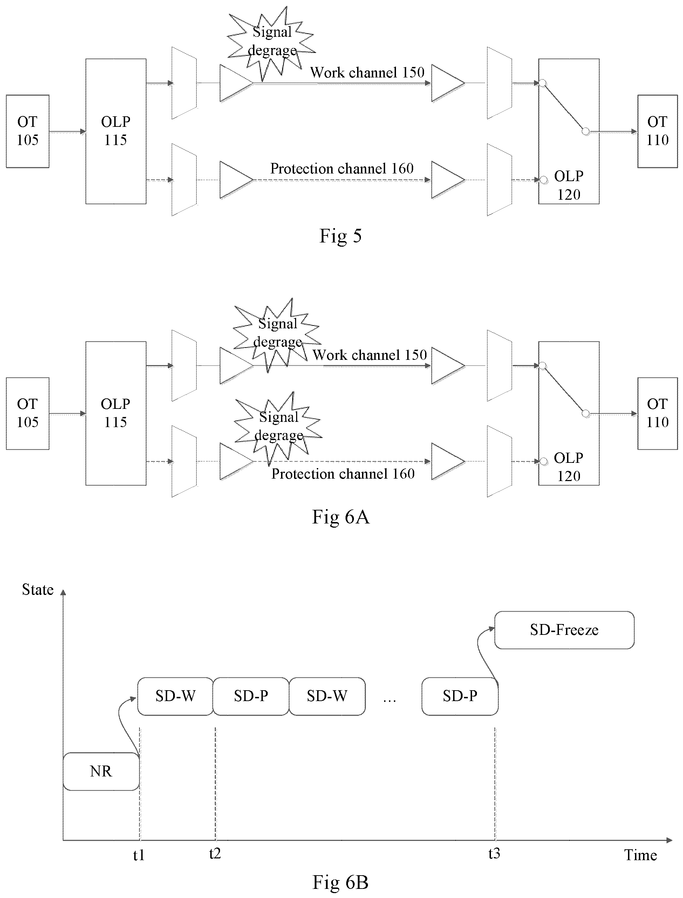

Fig. 5 illustrates a schematic diagram of optical channel switching protection according to an exemplary embodiment of the present disclosure. As shown in Fig. 5, assuming that the OTN/DCI network is currently operating on the working optical channel 150, optical signal degradation occurs on this optical channel, resulting in damage or deterioration of the optical communication service quality. However, the optical power detected by the downstream OLP module is still above the optical loss alarm threshold.

In this situation, the digital coherent optical (DCO) module in OT 110 may send the detected raw fault type information (such as LOS, LOF, LOM, AIS, TCA, etc.) to the OT processor 114 in OT 110 when detecting electrical layer fault information. Then, the OT processor 114 may assemble the fault information and physical channel identifier related to OT 110 into a fault message according to a predetermined format, and quickly send it to the processing module of OLP 120 (e.g. finite status machine FSM 122) through the internal local area network (ILAN).

FSM 122 analyzes the received fault message to obtain fault information as well as shelf identifier, slot identifier, port identifier, etc., and may map the fault message to the corresponding signal degradation (SD) alarm level of the protection group. Correspondingly, it may determine that the transition request/state of the protection group is SD-W. Based on the current working status "No Request" (NR) of the protection group, FSM 122 may determine to switch the optical channel to protection channel 160 according to the state transition table shown in Table 2, and generate a corresponding action instruction, which is then sent to the optical layer line protection module 124 in OLP 120.

In response to receiving the action indication, the optical layer line protection module 124 may perform corresponding actions, such as switching the optical switch to switch the optical channel from the working optical channel to the protection optical channel, and thus the optical communication service may be restored to normal.

Figs. 6A, 6B shows a schematic diagram of optical channel switching protection according to an exemplary embodiment of the present disclosure. As shown in Fig. 6A, assuming that the OTN/DCI network is currently operating on the working optical channel 150, optical signal degradation first occurs on this optical channel, resulting in the destruction or deterioration of optical communication service quality.

Similar to the embodiment shown in Fig. 5, the digital coherent optical (DCO) module in OT 110 may send the detected raw fault type information to OT processor 114 in OT 110 when detecting electrical layer fault information. Then, the OT processor 114 may generate a fault message in a predetermined format and quickly send it to the FSM 122 of the OLP 120 through the internal local area network (ILAN).

FSM 122 analyzes the received fault message to obtain fault information and physical channel identifier, maps the fault message to the corresponding signal degradation (SD) alarm level of the protection group, and accordingly, could determine that the transition request/state of the protection group is SD-W. Based on the current working state (NR) of the protection group, FSM 122 may generate a corresponding action instruction and send it to the optical layer line protection module in OLP 120. In response to receiving the action instruction, the optical layer line protection module may switch the optical channel from the working optical channel 150 to the protection optical channel 160 by switching the optical switch.

Assuming that after switching to the protection optical channel 160, the digital coherent optical (DCO) module in OT 110 still detects signal degradation (SD) fault information, OT processor 114 may send this fault information to FSM 122 of OLP 120.

FSM 122 evaluates the fault information and, after waiting for a predetermined time interval, determines that the transition request/state of the protection group is SD-P. Moreover, FSM 122 may generate a corresponding action instruction to command the optical layer line protection module to switch the optical channel from protection optical channel 160 to working optical channel 150.

It can be seen that in the case where both the working optical channel and the protection optical channel detect electrical layer faults successively, FSM 122 will perform the above switching operation cyclically, and the protection group will also be performed between SD-W and SD-P states cyclically. Fig. 6B shows the timing diagram of the protection group state, for example, at time 11, the protection group transitions from NR state to SD-W state, and at time t2, the protection group transitions from SD-W state to SD-P state, and a switching oscillation occurs, which will affect the user's service usage.

Therefore, in this embodiment, FSM 122 may start a predetermined timer and count the number of switching. As shown in Fig. 6B, if the optical channel switching count exceeds a preset value within the time interval specified by the timer (t3-t2), FSM 122 may freeze the transition state of the protection group, that is, determine that the protection group has entered the SD-Freeze state, and it will no longer send a new action instruction for optical channel switching. The OTN/DCI network system only transmits service data on the optical channel after the state is frozen.

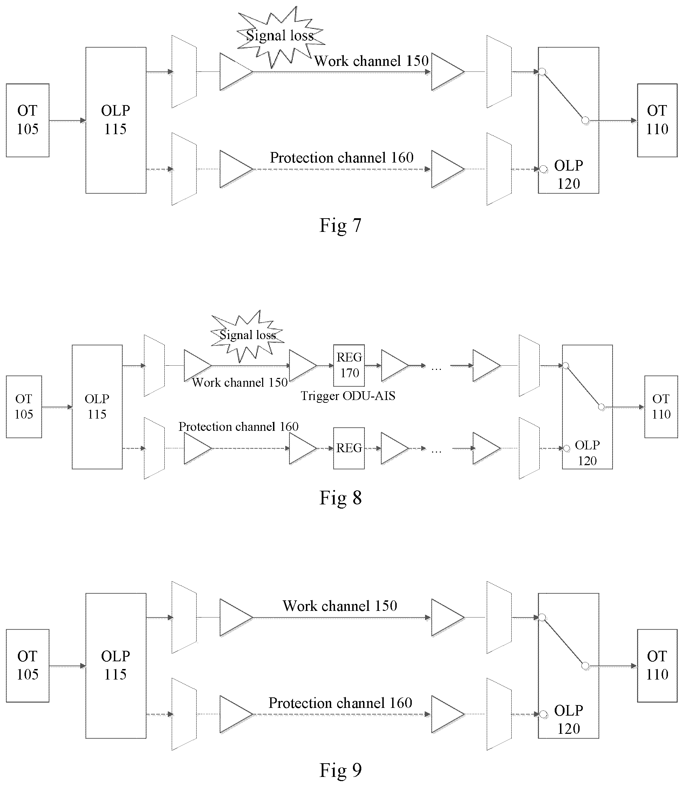

Fig. 7 illustrates a schematic diagram of optical channel switching protection according to an exemplary embodiment of the present disclosure. As shown in Fig. 7, assuming that the OTN/DCI network is currently operating on the working optical channel 150, optical signal loss occurs on this optical channel, resulting in a deterioration of the quality of optical communication services.

According to an embodiment, the optical layer line protection module 124 in OLP 120 detects a loss of signal (LOS) fault message in optical layer and sends it to the processing module FSM 122 of OLP 120.

After receiving the fault information, FSM 122 may map the fault information to the signal failure (SF) alarm level, and accordingly, it may determine that the transition request/state of the protection group is SF-W. Based on the current working state "No Request" (NR) of the protection group, FSM 122 may determine the optical channel to switch to protection channel 160 according to the state transition table shown in Table 2, and generate a corresponding action instruction and send it to the optical layer line protection module.

In response to receiving the action instruction, the optical layer line protection module may perform corresponding actions, such as switching the optical switch so as to switch the optical channel from the working optical channel to the protection optical channel 160, and thus the optical communication service may be restored to normal.

In this embodiment, after a period of time, the optical layer fault will propagate to the electrical layer, i.e. after waiting for a certain period of time, FSM 122 will further receive a fault signal for signal degradation (SD) alarm level from OT 110. But due to the lower priority of SD compared to SF, FSM 122 may ignore the corresponding request.

Fig. 8 shows a schematic diagram of optical channel switching protection according to an exemplary embodiment of the present disclosure. As shown in Fig. 8, assuming that the OTN/DCI network is currently operating on working optical channel 150, wherein electrical relay devices 170 are installed on working optical channel 150 and protection optical channel 160 to achieve long-distance transmission. Optical signal loss occurred on the working optical channel 150 located upstream of the electrical relay device 170, resulting in a disruption of the quality of optical communication services.

According to an embodiment, if a fault defect is detected in the OT of the upstream link of the electrical relay device 170, the generation of an optical channel data unit alarm indication signal (ODU-AIS) may be triggered and the signal is transmitted to OT 110 of the downstream link. After detecting the fault signal, OT 110 may immediately assemble it into a fault message in the predetermined format and quickly send it to processing module FSM 122 of the downstream link OLP 120 through the internal local area network (ILAN).

FSM 122 analyzes the received fault message to obtain fault information as well as shelf identifier, slot identifier, port identifier, etc., and may map the fault message to the corresponding signal degradation (SD) alarm level of the protection group. Correspondingly, it may determine that the transition request/state of the protection group is SD-W. Based on the current working state "No Request" (NR) of the protection group, FSM 122 may determine the optical channel to switch to protection channel 160 according to the predetermined state transition table, generate a corresponding action instruction, and send the instruction to the optical layer line protection module in OLP 120.

In response to receiving the action indication, the optical layer line protection module may perform corresponding switching actions, such as switching the optical switch to switch the optical channel from the working optical channel to the protection optical channel, and thus the optical communication service may be restored to normal.

Fig. 9 illustrates a schematic diagram of optical channel switching protection according to an exemplary embodiment of the present disclosure. As shown in Fig. 9, assuming an automatic optimization feature is utilized in the OTN/DCI network, this will result in temporary mismatch in configuration information or profiles at both ends of the network. Due to different configuration files being on one end of the network, OT 110 on the other end of the network may detect an electrical layer fault, but OLP 120 will not detect any optical layer fault.

According to an embodiment, when OT 110 detects electrical layer fault information, it may send it to FSM 122 of OLP 120 through an internal local area network (ELAN).

FSM 122 evaluates the received fault message , and it may determine that the transition request/state of the protection group is SD-W. Based on the current working state ("NR") of the protection group, FSM 122 may generate a corresponding action instruction and send it to the optical layer line protection module in OLP 120. In response to receiving the action instruction, the optical layer line protection module may switch the optical channel from the working optical channel to the protection optical channel 160 by switching the optical switch.

After switching to protection optical channel 160, due to the possibility that the two ends of the network still have different configuration files, OT 110 will also detect electrical layer fault information, which may be sent to FSM 122. FSM 122 evaluates the fault information and, after waiting for a predetermined time interval, determines that the transition request/state of the protection group is SD-P. Moreover, FSM 122 may generate a corresponding action instruction to command the optical layer line protection module to switch the optical channel from protection optical channel 160 to working optical channel 150.

Similar to the situation shown in Fig. 6A, the protection group will perform switch oscillation between SD-W and SD-P states. Similarly, if the optical channel switching count exceeds a preset value within a predetermined time interval, FSM 122 may freeze the transition state and action indication of the protection group, and determine to enter the SD-Freeze state.

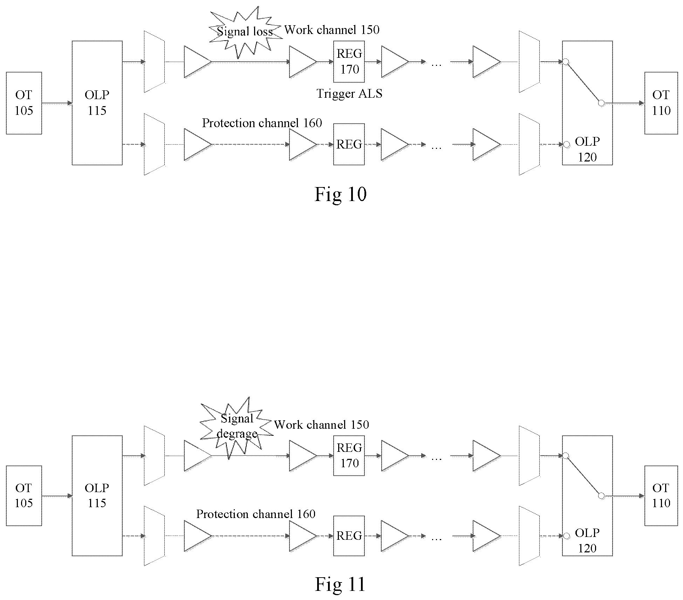

Fig. 10 illustrates a schematic diagram of optical channel switching protection according to an exemplary embodiment of the present disclosure. As shown in Fig. 10, assuming the OTN/DCI network is currently operating on working optical channel 150, wherein electrical relay devices 170 are installed on working optical channel 150 and protection optical channel 160. Optical signal loss occurred on the working optical channel 150 located upstream of the electrical relay device 170, resulting in a disruption of the quality of optical communication services.

According to an embodiment, the OT of the upstream link of the electrical relay device 170 detects a fault defect and triggers the auto laser shutdown (ALS) of the laser. After the laser that sends the optical signal is turned off, the optical layer line protection module in the downstream link OLP 120 will detect a fault message for loss of signal (LOS) in the optical layer and send it to the processing module FSM 122 of OLP 120.

After receiving the fault information, FSM 122 may map the fault information to the signal failure (SF) alarm level, and accordingly, it may determine that the transition request/state of the protection group is SF-W. Based on the current working state "No Request" (NR) of the protection group, FSM 122 may determine the optical channel to switch to protection optical channel 160 according to the preconfigured state transition table, and generate a corresponding action instruction and send it to the optical layer line protection module.

In response to receiving the action instruction, the optical layer line protection module may perform corresponding actions, such as switching the optical switch to switch the optical channel from the working optical channel to the protection optical channel 160, and thus the optical communication service may be restored to normal.

Fig. 11 illustrates a schematic diagram of optical channel switching protection according to an exemplary embodiment of the present disclosure. As shown in Fig. 11, electrical relay devices 170 are installed on the working optical channel 150 and the protection optical channel 160. Assuming that the OTN/DCI network is currently operating on the working optical channel 150, optical signal degradation occurs on this optical channel, resulting in damage or deterioration of optical communication service quality.

In some cases, the electrical relay device 170 did not trigger any action to the downstream link, and the optical power detected by the downstream OLP module was also above the optical loss alarm threshold. As for this scenario, similar to the situation shown in Fig. 5, the digital coherent optical (DCO) module in OT 110 may detect electrical layer fault information and send the detected original fault type information to OT processor 114 in OT 110. Then, the OT processor 114 may assemble the fault information and physical channel identifier related to OT 110 into a fault message in a predetermined format, and quickly send it to FSM 122 of OLP 120 through the internal local area network (ILAN).

FSM 122 analyzes the received fault message to obtain fault information as well as shelf identifier, slot identifier, port identifier, etc., and may map the fault message to the corresponding signal degradation (SD) alarm level of the protection group. Correspondingly, it may determine that the transition request/state of the protection group is SD-W. Based on the current working state "No Request" (NR) of the protection group, FSM 122 may determine the optical channel to switch to protection optical channel 160 according to the preconfigured state transition table, and generate a corresponding action instruction and send it to the optical layer line protection module in OLP 120.

In response to receiving the action instruction, the optical layer line protection module may perform corresponding actions, such as switching the optical switch to switch the optical channel from the working optical channel to the protection optical channel, and thus the optical communication service may be restored to normal.

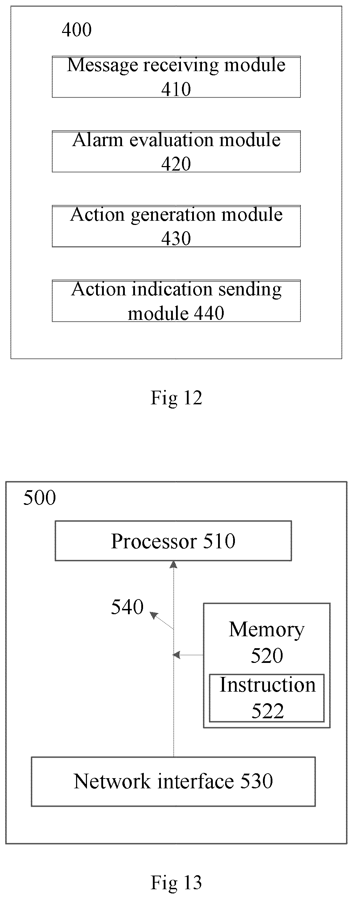

Fig. 12 shows a schematic functional block diagram of an apparatus for optical channel protection according to an exemplary embodiment of the present disclosure. It will be understood that the functional blocks shown in Fig. 12 may be implemented by hardware, software, or a combination of both hardware and software to perform the relevant operations described herein, and the functional blocks shown in Fig. 12 may be integrated into one functional block or divided into sub blocks to implement the principles of the present disclosure described above. Therefore, the description here also supports feasible combinations, divisions, or further definitions of various functional blocks.

Referring to Fig. 12, the apparatus for optical channel protection 400 may comprise a message receiving module 410, an alarm evaluation module 420, an action indication generating module 430, and an action indication sending module 440. The message receiving module 410 may be configured to receive a first fault message from an electrical layer module in an OTN/DCI network, wherein the first fault message comprises first fault information associated with the electrical layer and a physical channel identifier associated with the electrical layer module. In one embodiment, the message receiving module 410 may also be configured to receive second fault information associated with the optical layer from the optical layer module of the OTN/DCI network.

The alarm evaluation module 420 may be configured to perform alarm evaluation based on the fault information responding to receiving fault information in the optical transmission network. The fault information may comprise at least one of the first fault information and the second fault information.

In some embodiments, performing alarm evaluation based on the fault information may comprise: mapping the first fault information and/or the second fault information to the corresponding first alarm level and/or the second alarm level; and determining the alarm level of the fault information based on the first alarm level and/or the second alarm level.

In some embodiments, the priority of the first alarm level is lower than the priority of the second alarm level.

In some embodiments, the first alarm level is configured to indicate signal degradation (SD), and the second alarm level is configured to indicate signal failure (SF).

The action indication generating module 430 may be configured to generate an action indication for optical channel switching based at least on the evaluation result.

In some embodiments, generating an action indication for optical channel switching based on the evaluation result comprises: determining the transition state of the protection group of the optical transmission network (OTN/DCI) based on the evaluation result; and generating the action instruction for optical channel switching based on the current request of the protection group and the determined new transition state.

In some embodiments, the action indication generating module 430 may also be configured to freeze the current transition state and action indication of the protection group in response to the number of optical channel switching between the working optical channel and the protection optical channel exceeding a predetermined value within a preset time.

The action indication sending module 440 may be configured to send the action indication to the optical layer line protection module in the optical transmission network.

In some embodiments, the apparatus for optical channel protection 400 may also be configured to enable alarm evaluation based on the first fault information according to the configuration information of the optical transmission network, and generate an action indication for the optical channel switching based on the evaluation result.

Although not shown, the apparatus for optical channel protection 400 may also comprise other functional components or modules such as message analyzation modules, timers, etc., to enable appropriate processing of received fault information for facilitating triggering protection operations.

Fig. 13 shows a structural block diagram of a network device 500 according to an exemplary embodiment of the present disclosure. The network device 500 may be implemented as the apparatus for optical channel protection 400 described above. As shown in Fig. 13, the network device 500 may comprise one or more processors 510, one or more memories 520, and one or more network interfaces 530, which may communicate with each other through a bus system 540.

The processor 510 may be, for example, a central processing unit (CPU), a general-purpose processor, a controller, a digital signal processor (DSP), an application specific integrated circuit (ASIC), a field programmable gate array (FPGA) or other programmable logic devices, transistor logic devices, hardware components, or any combination thereof. The processor 510 may execute instructions in the memory 520 and/or exchange data with it, thereby controlling other components coupled through the bus 540 to cooperate and perform the methods, steps, or functions described above.

Memory 520 may comprise various forms of storage media or be implemented using any suitable data storage technology, such as volatile and/or non-volatile memory. Volatile memory may comprise, but is not limited to, random access memory (RAM), cache memory, etc. Non-volatile memory may comprise but is not limited to read-only memory (ROM), hard disk, flash memory, etc. The term 'non-volatile' in this article refers to the limitation of the medium itself (i.e. tangible rather than signal), rather than the limitation of data storage persistence (e.g. RAM or ROM). In addition, at least one memory 520 may comprise, but is not limited to, electronic, magnetic, optical, electromagnetic, infrared, or semiconductor systems, devices, devices, or any combination thereof.

The memory 520 may comprise computer instructions 522, which may be executed by the processor 510, so that the processor 510 may control other components coupled through the bus 540 to cooperate and perform the methods, steps, or functions related to the apparatus for optical channel protection 400 described above.

Network interface 530 may be a device with network data reception and transmission functions, such as a receiving circuit, receiver, I/O interface, etc.

According to exemplary embodiments of the present invention, any one of (at least one) processor, (at least one) memory, and (at least one) interface, as well as any one of the units/devices shown, may be implemented as a separate module, chip, chipset, circuit, etc., or one or more of them may be implemented as a common module, chip, chipset, circuit, etc., respectively.

Some example embodiments also provide computer program code or instructions that, when executed by one or more processors, may cause a device or apparatus to perform the processes described above. The computer program code used to execute the process of the example embodiments may be written in any known or future developed programming language, such as Java, C++, C, and Assembler. Computer program code may be provided to one or more processors or controllers of a general-purpose computer, specialized computer, or other programmable data processing device, such that when the program code is executed by the processor or controller, it enables the implementation of the functions/operations specified in the flowchart and/or block diagram. Program code may be executed entirely on local computing devices, partially on local computing devices, as a standalone software package, partially on local computing devices and partially on remote computing devices, or entirely on remote computing devices or servers.

Some example embodiments also provide a computer program product or computer-readable medium storing computer program code or instructions that, when executed by a processor, cause the apparatus for optical channel protection to perform the processing methods, steps, or functions described above. Computer readable media may be any tangible medium that may contain or store programs for use by instruction execution systems, devices, or equipment or in combination with them. Machine readable media may be machine readable signal media or machine readable storage media. Machine readable media may comprise, but are not limited to, electronic, magnetic, optical, electromagnetic, infrared, or semiconductor systems, devices, or equipment, or any suitable combination thereof. More specific examples of machine-readable storage media will comprise electrical connections with one or more wires, portable computer floppy disks, hard disks, random access memory (RAM), read-only memory (ROM), erasable programmable read-only memory (EPROM or flash memory), fiber optics, portable optical disc read-only memory (CD-ROM), optical storage devices, magnetic storage devices, or any suitable combination thereof.

The basic principles of the present disclosure have been described above in conjunction with the embodiments. However, it should be pointed out that the advantages, benefits, effects, etc. mentioned in the present disclosure are only examples and not limitations, and cannot be considered as necessary for each embodiment of the present disclosure. In addition, the specific details disclosed above are only for the purpose of illustration and ease of understanding, and not for limitation. The above details do not limit the present disclosure to necessarily adopt the specific details mentioned above for implementation.

The terms "component," "module," "system," etc. used in this disclosure are used to refer to computer related hardware, software, firmware, dedicated circuits or logic, general-purpose hardware or controllers, or other computing devices, or some combination thereof. In addition, modifiers such as "first" and "second" throughout the specification and claims are typically intended to distinguish different elements, operations, etc., rather than emphasizing any importance or ranking.

Although some embodiments have been described, these embodiments have been given by way of example and are not intended to limit the scope of the present disclosure. Various modifications, substitutions, and changes may be made to the form of the methods and systems described herein without departing from the spirit of the present disclosure. Therefore, it should be understood that the appended claims and their equivalents are intended to cover these forms or modifications falling within the scope and spirit of the various embodiments of the present disclosure.

## Claims

1. A method for optical channel protection comprising:
in response to receiving (306) fault information in an optical transmission network, performing (308) an alarm evaluation based on the fault information, the fault information comprising first fault information associated with an electrical layer of the optical transmission network; and
generating (310) an action indication for optical channel switching based at least on a result of the alarm evaluation.

2. The method of claim 1, wherein the fault information further comprises second fault information associated with an optical layer of the optical transmission network.

3. The method of claim 1 or 2, wherein said performing an alarm evaluation (308) based on the fault information comprises:
mapping the first fault information and/or the second fault information to a corresponding first alarm level and/or second alarm level; and
determining an alarm level of the fault information based on the first alarm level and/or the second alarm level.

4. The method of claim 3, wherein the first alarm level has a lower priority than the second alarm level.

5. The method of claim 3 or 4, wherein the first alarm level is configured to indicate signal degradation, SD, and the second alert level is configured to indicate signal failure, SF.

6. The method of any of claims 1-5, wherein a) the method further comprises
receiving a first fault message from an electrical layer module in the optical transmission network, wherein the first fault message comprises the first fault information and a physical channel identifier associated with the electrical layer module, and/or
wherein b) the method further comprises
according to configuration information of the optical transmission network, enabling to perform the alarm evaluation based on the first fault message, and generating the action indication for the optical channel switching based on the result of the alarm evaluation, and/or
wherein c) generating the action indication for the optical channel switching based at least on the result of the alarm evaluation comprises:
determining a transition state of a protection group of the optical transmission network based on the result of the alarm evaluation; and
generating an action indication for the optical channel switching based on a current request and the determined new transition state of the protection group
, wherein for example the method further comprises:
in response to a number of the optical channel switching performed between a working optical channel and a protection optical channel within a predetermined time exceeding a predetermined value, freezing the current transition state of the protection group and the action indication, and/or
wherein d) the method further comprises:
sending the action indication to an optical layer line protection module in the optical transmission network.

7. An apparatus (500) for optical channel protection, comprising:
at least one processor (510); and
at least one memory (520) storing instructions (522) that, when executed by the at least one processor (510), cause the apparatus (500) at least to:
in response to receiving (306) fault information in an optical transmission network, perform (308) an alarm evaluation based on the fault information, the fault information comprising first fault information associated with an electrical layer of the optical transmission network; and
generate (310), based at least on a result of the alarm evaluation, an action indication for optical channel switching.

8. The apparatus (500) of claim 7, wherein the fault information further comprises second fault information associated with an optical layer of the optical transmission network.

9. The apparatus (500) of claim 7 or 8, wherein said performing an alarm evaluation based on the fault information comprises:
mapping the first fault information and/or the second fault information to a corresponding first alarm level and/or second alarm level; and
determining an alarm level of the fault information based on the first alarm level and/or the second alarm level.

10. The apparatus (500) of claim 9, wherein the first alarm level has a lower priority than the second alarm level.

11. The apparatus (500) of claim 9 or 10, wherein the first alarm level is configured to indicate signal degradation (SD), and the second alert level is configured to indicate signal failure (SF).

12. The apparatus (500) of any of claims 7-11, wherein a) the instructions, when executed by the at least one processor, cause the apparatus for optical channel protection at least to:
receive a first fault message from an electrical layer module in the optical transmission network, wherein the first fault message comprises the first fault information and a physical channel identifier associated with the electrical layer module, and/or
wherein b) the instructions, when executed by the at least one processor, cause the apparatus for optical channel protection at least to:
according to configuration information of the optical transmission network, enable to perform the alarm evaluation based on the first fault message, and generate the action indication for the optical channel switching based on the result of the alarm evaluation, and/or
wherein c) generating an action indication for optical channel switching based on at least the evaluation result comprises:
based on the evaluation result, determining a transition state of a protection group of the optical transmission network; and
generating an action instruction for optical channel switching based on a current request of the protection group and the determined new transition state
, wherein for example the instructions, when executed by the at least one processor, further cause the apparatus for optical channel protection at least to:
freeze the current transition state and action indication of the protection group in response to that a number of the optical channel switching between the working optical channel and the protection optical channel within a preset time exceeds a predetermined value, and/or
wherein d) the instructions, when executed by the at least one processor, further cause the apparatus for optical channel protection at least to:
send the action indication to the optical layer line protection module in the optical transmission network.

13. An apparatus (400) for optical channel protection comprising:
an alarm evaluation module (420) for responding to receiving fault information in an optical transmission network, performing alarm evaluation based on the fault information, the fault information comprising first fault information associated with an electrical layer of the optical transmission network; and
an action instruction generation module (430) for generating an action instruction for optical channel switching based on at least the evaluation result.

14. A computer-readable medium (520) storing instructions (522) that, when executed by at least one processor (510) in an apparatus (500) for optical channel protection, cause the apparatus (500) for optical channel protection to perform a method of any of claims 1 to 6.

15. A computer program product comprising instructions that, when executed by at least one processor in an apparatus for optical channel protection, cause the apparatus for optical channel protection to perform a method of any of claims 1 to 6.
